Europäisches Patentamt

(19) European Patent Office

Office européen des brevets

(11) Publication number: **0 058 075**
**A1**

## (12) EUROPEAN PATENT APPLICATION

(21) Application number: **82300608.5**

(22) Date of filing: **08.02.82**

(51) Int. Cl.³: **B 62 D 53/12**

(30) Priority: **10.02.81 AU 7531/81**

(43) Date of publication of application:
**18.08.82 Bulletin 82/33**

(84) Designated Contracting States:
**AT BE CH DE FR GB IT LI LU NL SE**

(71) Applicant: HOCKNEY ENGINEERING PTY. LIMITED
2 Dupas Street
Smithfield New South Wales 2164(AU)

(72) Inventor: Dingle, John Trevor
41 Mount William Street
Gordon New South Wales 2072(AU)

(74) Representative: JENSEN & SON
8 Fulwood Place High Holborn
London WC1V 6HG(GB)

(54) A king pin for the fifth wheel of an articulated vehicle.

(57) A service line coupling for the fifth wheel of an articulated vehicle, the coupling includes a hollow king pin (10, 30) attached to one of the skid plates, and a service line coupling member (13, 33) movably attached to the other skid plate so as to be engageable with the extremity of the king pin (10, 30) to provide continuity of service lines (23, 24, 34, 35, 37, 38)

EP 0 058 075 A1

./...

FIG. 1

- 1 -

"A KING PIN FOR THE FIFTH WHEEL OF AN ARTICULATED VEHICLE"

The present invention relates to the fifth wheel of articulated vehicles and more particularly to the king pin of the fifth wheel.

The majority of prime movers and semi-trailers are coupled together by a fifth wheel having a king pin. In most instances the mechanical coupling of one to the other is automatic and the prime mover is moved into position so that the king pin enters a recess in the turntable and actuates a clamp which secures the king pin in place. However, power supply and brake air supply is connected manually by suitable plugs and long leads allow for articulation of the trailer.

It is a disadvantage of the above system that in instances where the trailer is frequently uncoupled from the prime mover such as in container terminals where small tugs are used to move semi-trailers to various positions for loading and unloading of containers, that the power supply and brake supply have to be frequently uncoupled and recoupled.

It is an object of the present invention to overcome or substantially ameliorate the above disadvantages.

A service line coupling to connect a trailer and prime mover of an articulated vehicle having a fifth wheel assembly with two skid plates, said coupling comprising; a king pin forming part of the fifth wheel assembly and being attached to a first one of the skid plates, said king pin having a service passage extending through it so as to provide an opening adjacent the extremity of the king pin; a service line coupling member for movable attachment to the other of said skid plates, said member being formed with a service passage extending through it so as to provide an opening at its periphery, and wherein said member is movable to contact said king pin so that the king pin opening is generally facing the coupling opening thus providing continuity of the service passages.

A preferred form of the present invention will now be described by way of example with reference to the

- 2 -

accompanying drawings, wherein:

Figure 1 is a schematic sectioned side elevation of a service line coupling including a king pin for the fifth wheel of an articulated vehicle; and

Figure 2 is a further service line coupling including a king pin for the fifth wheel of an articulated vehicle.

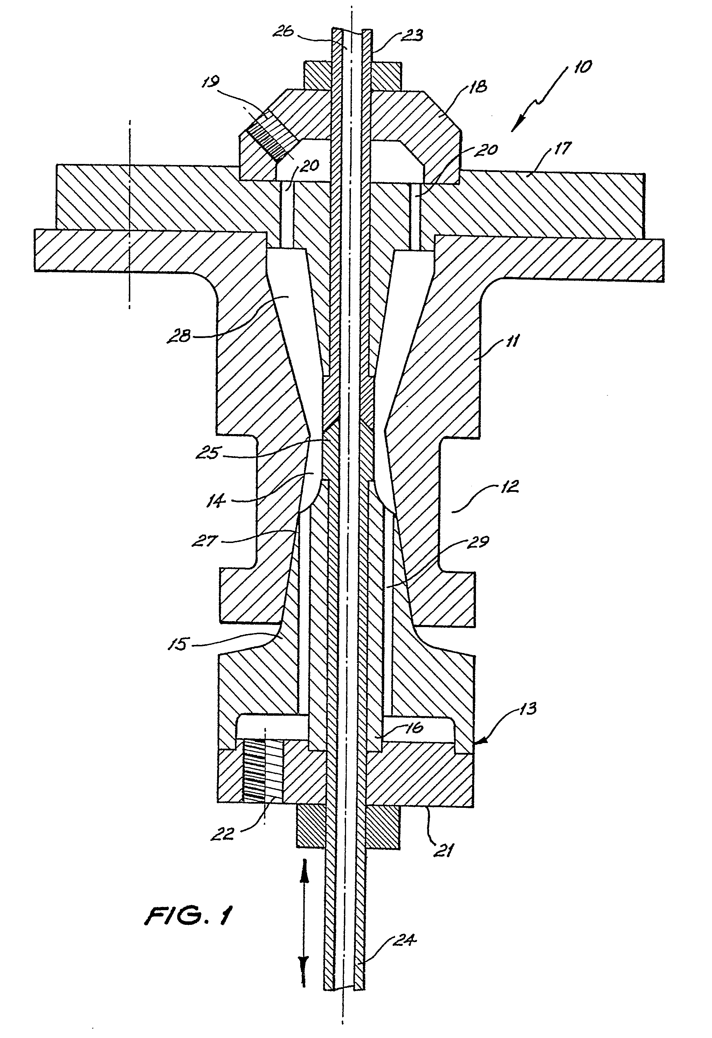

Firstly with reference to Figure 1, there is depicted a service line coupling for an articulated vehicle including a king pin 10 having a generally cylindrical body 11 with a conventional slot 12 to receive a clamp of the turntable of the fifth wheel assembly of the vehicle. The king pin is attached to one of the skid plates of the fifth wheel assembly. The body 11 is adapted to be attached to the trailer while there is further provided a coupling member 13 which is adapted to be attached to the skid plate of the prime mover. The member 13 is slidably movably mounted on the skid plate so that upon the body 11 being engaged within the turntable, an air or hydraulic ram is activated to move the coupling 13 into engagement within a central passage 14 formed in the body 11. The coupling 13 includes a conical projection 15 which has a central passage 16. The passage 14 has one end sealingly closed by means of a plate 17 and a cap 18, with the cap 18 being provided with an air access passage 19. The passages 20 extend through the plate 17 to provide opening at its periphery, and wherein said member is movable to contact said king pin so that the king pin opening is generally facing the coupling opening thus providing continuity of the service passages.

A preferred form of the present invention will now be described by way of example with reference to the accompanying drawings, wherein:

Figure 1 is a schematic sectioned side elevation of a service line coupling including a king pin for the fifth wheel of an articulated vehicle; and

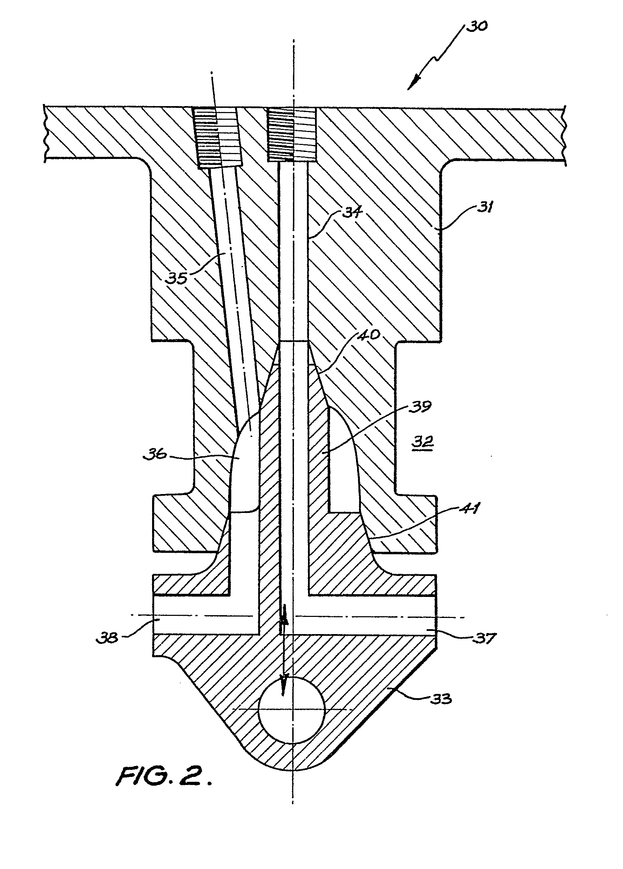

Figure 2 is a further service line coupling including a king pin for the fifth wheel of an articulated vehicle.

Firstly with reference to Figure 1, there is depicted a service line coupling for an articulated vehicle including a king pin 10 having a generally cylindrical body 11 with a conventional slot 12 to receive a clamp of the turntable of the fifth wheel assembly of the vehicle. The king pin is attached to one of the skid plates of the fifth wheel assembly. The body 11 is adapted to be attached to the trailer while there is further provided a coupling member 13 which is adapted to be attached to the skid plate of the prime mover. The member 13 is slidably movably mounted on the skid plate so that upon the body 11 being engaged within the turntable, an air or hydraulic ram is activated to move the coupling 13 into engagement within a central passage 14 formed in the body 11. The coupling 13 includes a conical projection 15 which has a central passage 16. The passage 14 has one end sealingly closed by means of a plate 17 and a cap 18, with the cap 18 being provided with an air access passage 19. The passages 20 extend through the plate 17 to provide communication between the passage 14 and the access passage 19. The passage 16 has one end sealingly closed by means of a cap 21 which has an access passage 22. Extending longitudinally through the passage 14, plate 17 and cap 18 is a metal conduit 23 while extending longitudinally through the passage 16 and cap 21 is a further metal conduit 24. The conduit 24 has a convex frustoconical end 25 which is engaged within a recess of complimentary shape formed on the end of the conduit 23. Accordingly, the conduits 23 and 24 define a longitudinally extending passage 26.

Preferably the conical projection 15 is formed of resilient material so that upon the coupling 13 being pushed into engagement within the passage 14, the conical projection will resiliently deform so as to form a good seal with the interior surfaces defining the passage 14. It should be appreciated that the passage 14 is partly defined by a conical surface 27 which acts to guide the conical projection 15 to a correct position within the passage 14.

In operation the conduits 23 and 24 by being formed of metal could provide the trailer with electric power and the clamp of the turntable providing an earth when in contact with the body 11 of the king pin 10. It should further be appreciated that the king pin 10 is provided with two separate air ducts, one of which could provide the trailer with compressed air for emergency braking. This first duct which provides the air for emergency braking would be defined by the access passage 19, passages 20, the annular portion 28 of the passage 14, the passages 29 extending through the conical projection 15, the lower portion of the passage 16 and the access passage 22. The control air for the braking system would be supplied through the longitudinal passage 26. The coupling 13 would be universally pivotally mounted to allow for alignment with the passage 14.

Now with reference to Figure 2, there is depicted a king pin 30 having a cylindrical body 31 having the conventional recess 32 adapted to receive the clamp of a conventional turntable. There is also depicted a coupling 33 adapted to engage the body 31 of the king pin. Extending longitudinally through the king pin 31 are two passages 34 and 35 which communicate with a concaved recess 36. The coupling 33 is preferably formed of resilient material so that upon being inserted in the recess 36, the coupling 33 deforms so as to form a good seal with the surfaces encompassing the recess 36. The coupling 33 is also provided with two passages 37 and 38 which are adapted to communicate with the passages 34 and 35. More particularly the passage 37 extends longitudinally through a projection 39 which is part of the coupling 33. The projection 39 has a conical end 40 which sealingly engages on a complimentary conical surface extending from the recess 36 so as to sealingly separate the passages 34 and 37 from the passages 35 and 38. The coupling 33 has a further conical surface 41 which engages a complimentary conical surface defining part of the recess 36 so as to again sealingly close off the passages 35 and 38 from the atmosphere.

In operation the passages 35 and 38 by being in communication via recess 36 could provide air for the emergency braking system for the trailer while the passages 35 and 37 could provide controlled air for the braking of the trailer.

It should be particularly appreciated that in this embodiment the king pin 30 does not provide electrical power supply to the trailer. In this particular instance the trailer could be provided with its own battery with the brake lights of the trailer actuated by the control air and with the flasher lights being operated remotely by radio control.

With the embodiment of Figure 1, the control of the brake lights of the trailer could again be achieved by means of the control air delivered to the braking system while flasher lights could be controlled via remote radio control or alternatively by high frequency signals delivered through the casings of the conduits 23 and 24. Still further, a battery could be installed in the trailer and only charging current could be delivered to the battery via the conduits 23 and 24 with the flasher, stop and side lights being controlled by a closed circuit radio system with this arrangement necessitating the inclusion of a diode to prevent the prime mover electrical system draining power from the trailer battery.

It is an advantage for the trailer to have its own independent electrical system with a battery since the trailer lights are usable when the trailer is not coupled to a prime mover.

CLAIMS

1.      A service line coupling to connect a trailer and prime mover of an articulated vehicle having a fifth wheel assembly with two skid plates, said coupling comprising; a king pin forming part of the fifth wheel assembly and being attached to a first one of the skid plates, said king pin having a service passage extending through it so as to provide an opening adjacent the extremity of the king pin; a service line coupling member for movable attachment to the other of said skid plates, said member being formed with a service passage extending through it so as to provide an opening at its periphery, and wherein said member is movable to contact said king pin so that the king pin opening is generally facing the coupling opening thus providing continuity of the service passages.

2.      The coupling of claim 1, wherein said coupling member sealingly engages said king pin to enable a control fluid under pressure to be passed from the prime mover to the trailer.

3.      The coupling of claim 1 or 2, wherein said king pin is generally cylindrical, and the king pin passage extends generally axial of the king pin, and said coupling member moves generally along the axis of the king pin.

4.      The coupling of claim 1 or 3 further including, a first electrical connector extending through said king pin passage, and a second electrical connector extending through said connecting member position to engage said first electrical connector upon engagement of said king pin and coupling member.

5.      The coupling of claim 1 or 4, further including a first conduit extending through said king pin passage, and a second conduit extending through said coupling member positioned to engage said first electrical connector upon engagement of said king pin and coupling member.

6.      The coupling member of claim 5, wherein said first and second conduits are electrically insulated from said king pin and coupling member and are electrically conductive.

7.      The coupling of claim 3, 5 or 6 wherein said king pin passage has a frusto-conical end portion terminating in the king pin opening, and said coupling member has a frusto-conical part through which said coupling passage axially passes, and wherein said frusto-conical end portion and said frusto-conical part are complementary in configuration so as to be nestable, thus aiding in the engagement of said king pin and coupling member.

8.    A service line coupling substantially as hereinbefore described with reference to the accompanying drawings.

1/2

0058075

FIG. 1

0058075

FIG. 2.

## 0058075

European Patent
Office

**EUROPEAN SEARCH REPORT**

Application number

EP 82 30 0608.5

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | DE – C – 842 895 (TOUSSAINT & HESS HYDR.– HEBEZEUG–FABRIK GMBH) <br> * page 2, lines 27 to 76; fig. 1, 2 * <br> –– | 1–3 | B 62 D 53/12 |
| X | US – A – 2 924 464 (J. ZAJAC et al.) <br> * column 2, lines 14 to 62; fig. 1 to 3 * <br> –– | 1–4 | |
| X,Y | GB – A – 1 020 241 (PEER CARTAGE CO. INC.) <br> * claim 1; page 4, line 44 to page 6, line 9; fig. 2 * <br> –– | 1–4,7 | **TECHNICAL FIELDS SEARCHED (Int.Cl.³)** |
| X,Y | US – A – 3 428 334 (N.C. HILS) <br> * column 2, line 61 to column 7, line 42; fig. 1 to 6 * <br> –– | 1–4,7 | B 60 D 1/08 <br> B 62 D 53/00 |
| A | US – A – 2 525 086 (G.H. WRIGHT et al.) <br> ––––– | | |

The present search report has been drawn up for all claims

| Place of search | Date of completion of the search | Examiner |
|---|---|---|
| Berlin | 04-05-1982 | PETTI |

EPO Form 1503.1   08.78